# FASCICULE DE BREVET EUROPEEN

(11) **EP 0 464 449 B1**
(45) Date de publication et mention de la délivrance du brevet: **31.08.1994**
(21) Numéro de dépôt: 91109929.9
(22) Date de dépôt: 18.06.1991
(51) Int. Cl.: B60B 3/04, B21D 53/26

(54) **Procédé d'assemblage d'un disque de roue à une jante et roue ainsi obtenue**
Montageverfahren einer Radscheibe an eine Felge und ein so erhaltenes Fahrzeugrad
Method of assembly of a wheel disc to a rim, and wheel obtained as such

(30) Priorité: 05.07.1990 FR 9008666
(43) Date de publication de la demande: 08.01.1992
(73) Titulaire: COMPAGNIE GENERALE DES ETABLISSEMENTS MICHELIN - MICHELIN & CIE, 63040 Clermont-Ferrand Cédex (FR)
(72) Inventeur: Ferrand, Jean-Charles, F-63200 Riom (FR)
(74) Mandataire: Bauvir, Jacques

(56) Documents cités:
- WO-A-85/02586
- WO-A-88/07432
- GB-A- 371 220
- US-A- 2 083 326

## Description

On connaît deux grandes catégories de roues couramment utilisées dans les séries industrielles actuelles, notamment celles pour véhicules de tourisme.

D'une part, il s'agit des roues moulées, le plus souvent en alliage léger, qui sont pour la plupart moulées en une seule pièce, et d'autre part, il s'agit des roues embouties en tôle d'acier, constituées pour la plupart en deux pièces réalisées séparément, à savoir le disque et la jante, assemblés par rivets ou par soudure.

Les roues en alliage léger moulées connaissent un succès croissant pour les véhicules de tourisme, principalement pour des raisons d'ordre esthétique, et non technique car elles sont souvent de poids comparable aux roues en tôle. Ces dernières conservent un avantage important par rapport aux roues en alliage léger sur le plan du prix de revient. Malgré des efforts constants pour améliorer leur apparence, on leur ajoute le plus souvent un enjoliveur de grand diamètre pour les recouvrir en totalité ou en quasi-totalité, notamment parce que la zone de liaison entre le disque et la jante est disgracieuse.

L'objectif de la présente invention est de concilier les avantages de chacune des deux catégories de roues indiquées. L'objectif de la présente invention est donc de modifier la liaison du disque et de la jante pour en améliorer l'apparence. L'invention propose un procédé d'assemblage d'un disque à une jante en une seule pièce pour former une roue, consistant à positionner le disque sous le siège axialement extérieur de jante, à réaliser un cordon de soudure continu entre le disque et la jante du côté du disque visible après montage sur un moyeu, caractérisé en ce qu'on effectue une opération de finition par enlèvement de matière sur le cordon de soudure, pour assurer une continuité de forme visuelle entre la jante et le disque ainsi assemblés, ledit cordon de soudure étant exécuté de façon à réaliser un apport de matière suffisant.

Une roue en tôle obtenue par le procédé selon l'invention, constituée par un disque et une jante en une seule pièce, la jante ayant une gorge centrale de montage, et deux sièges disposés de part et d'autre de la gorge, chaque siège étant prolongé à son bord latéral par un rebord s'étendant radialement vers l'extérieur, est caractérisée en ce que le disque est conformé pour venir s'adapter à la jante au niveau d'un siège de celle-ci, et en ce que la face axialement extérieure du disque, au niveau de la roue périphérique est disposée sensiblement dans le prolongement de la face axialement extérieure du rebord de jante et en ce que la liaison du disque à la jante est constituée par un cordon de soudure continu disposé entre le disque et la jante du côté du disque axialement extérieur, et en ce que le cordon de soudure a subi une opération de finition par enlèvement de matière de sorte que l'état de surface du cordon de soudure assure la continuité de forme visuelle entre le disque et la jante.

Les figures jointes permettent de bien comprendre l'invention par la description d'un exemple donné à titre purement illustratif, et bien entendu non limitatif. Les figures 1, 2 et 3 représentent trois stades successifs et la fabrication d'une roue selon l'invention. Les figures 4, 5 et 6 représentent trois stades successifs de la fabrication d'une autre roue selon l'invention. Les figures 7, 8 et 9 représentent trois stades successifs de la fabrication d'un troisième exemple de roue selon l'invention.

On reconnaît aux figures une jante 1. Cette jante 1 est dite "en une seule pièce" et comporte donc une gorge centrale 10 représentée partiellement, pour engager le bourrelet d'un pneumatique au cours du montage, et, de chaque côté, un siège 11 (dont un seul est représenté) pour recevoir le bourrelet dudit pneumatique lorsqu'il est monté sur la jante 1. L'exemple décrit se rapporte aux roues pour véhicule de tourisme : selon les normes en vigueur, le siège 11 est légèrement incliné vers l'intérieur de la jante 1, d'un angle de 5° environ.

Le siège 11 est prolongé, à son bord latéral, par un rebord 12, qui s'étend radialement vers l'extérieur. Ce rebord 12 est, dans l'exemple considéré, orienté sensiblement dans un plan perpendiculaire à l'axe de la roue (axe de rotation non visible aux figures). Entre siège 11 et rebord 12, on voit un congé de raccordement. Dans d'autres cas, ce rebord 12 pourrait être incliné, en tout ou partie, par rapport à l'axe de la roue.

Une telle jante 1 est fabriquée par déformation progressive de la tôle. Sa surface radialement extérieure, sur laquelle on monte le pneumatique, et sa surface radialement intérieure, sur laquelle on positionne et on fixe le disque 2, ont donc approximativement le même profil, vu en coupe méridienne comme aux figures. Notamment, on aperçoit un bossage 14, du côté de la jante restant visible après montage du pneumatique. Ce bossage 14 correspond au congé 13 de raccordement entre siège 11 et rebord 12.

Le disque 2, en tôle embouti, comporte une partie centrale non représentée pour assurer le montage sur un moyeu, et une zone périphérique 20 prolongée par une zone que l'on appelera ici zone d'emboîtage 21 avec la jante. Usuellement, cette zone de liaison est cylindrique et disposée sous la gorge de montage 10. La liaison mécanique entre disque 2 et jante 1 est réalisée par les rivets, par soudure par points, ou par un cordon de soudure réalisé en bout de la zone de liaison, c'est-à-dire du côté non visible après montage sur véhicule, correspondant au côté droit sur les figures, ou par tout autre disposition équivalente.

Il est proposé ici, comme déjà connu en soi par la demande de brevet FR 2 123 274, de relier le disque 2 à la jante 1 sous le siège 11. La zone périphérique 20 et la zone d'emboitage 21 sont dimensionnées et conformées pour que cette liaison soit du côté dit "axialement extérieur" de la roue, en prenant pour repère la position qu'elle occupe lorsqu'elle est montée sur le véhicule.

Pour se rapprocher de la netteté de forme qui était jusqu'à la présente invention l'apanage des roues moulées, le disque 2 est conformé puis positionné par rapport à la jante 1 pour venir s'adapter à la jante au niveau d'un siège de celle-ci, de telle sorte que la face 20A axialement extérieur du disque, au niveau de la zone périphérique 20, soit disposée sensiblement dans le prolongement de la face 12A axialement extérieure du rebord 12 de la jante 1. Dans le cas décrit, se rapportant aux roues pour véhicules de tourisme principalement visées par la présente invention, ces faces 12A et 20A sont orientées sensiblement dans un plan perpendiculaire à l'axe de la roue.

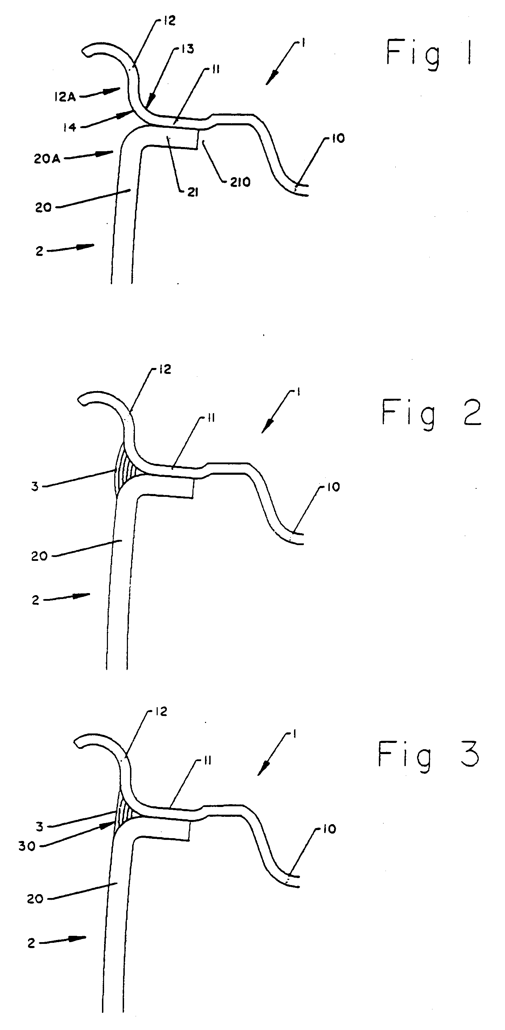

Après positionnement, le volume en creux apparaissant entre disque 2 et jante 1, du côté visible après montage de la roue sur un véhicule, va être comblé par l'exécution d'un cordon de soudure 3 qui doit impérativement être entre continu circonférentiellement, et provoquer un apport de matière suffisant en fonction de l'étape ultérieure du procédé (voir figures 2, 5 et 8).

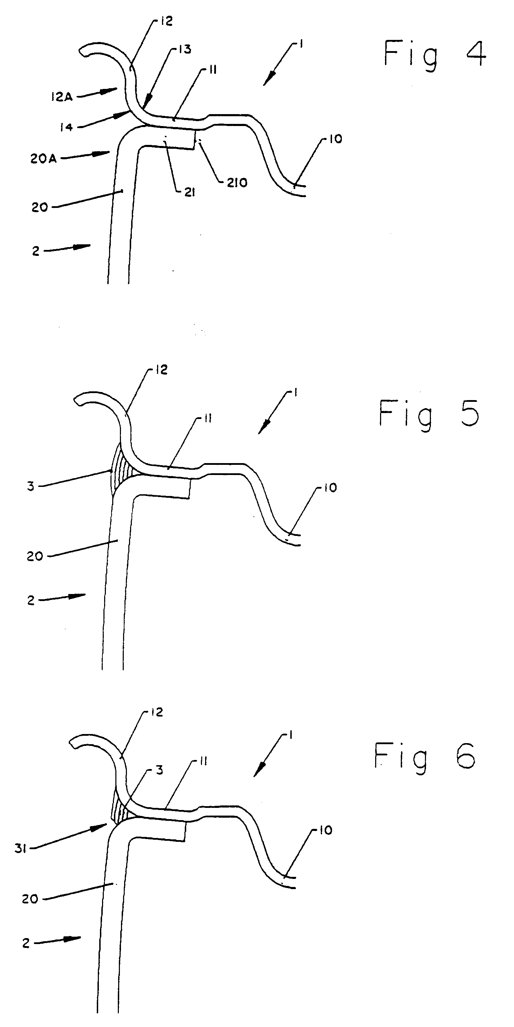

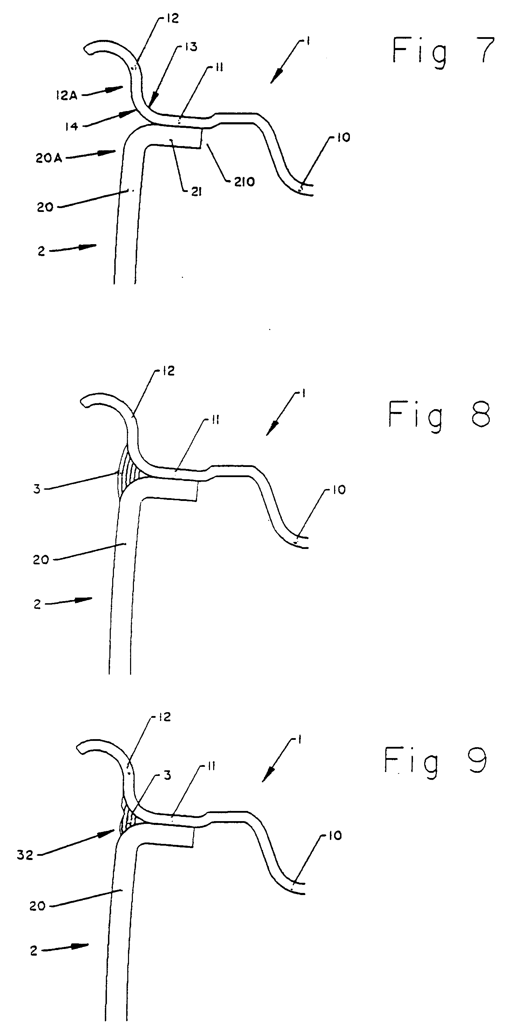

Après exécution de la soudure, on effectue une opération de finition pour obtenir une continuité de forme entre disque 2 et jante 1, lorsque l'on regarde la roue du côté visible après montage sur véhicule, c'est-à-dire le côté gauche des figures. Les figures 3, 6 et 9 montrent le résultat de cette opération. Par exemple, avec un outil de coupe, on usine le cordon pour l'aplanir, afin d'obtenir une surface plane 30 et continue comme à la figure 3. On peut aussi réaliser une rainure 31 ou une petite moulure 32 de décoration, comme représenté aux figures 6 et 9 respectivement.

Bien entendu, on peut aussi décaler la face 20A par rapport au prolongement du disque 12A, et effectuer un usinage du cordon de soudure en conséquence. De façon générale, on peut dans tous les cas obtenir n'importe quelle forme autre que plane. L'invention permet toujours de faire disparaître le creux très effilé et approfondi, visible entre disque 2 et jante 1 sur les roues connues, toujours de piètre effet esthétique, notamment parce qu'il est difficile de bien nettoyer cette zone, et parce qu'elle est souvent plus sensible à la corrosion.

Cette soudure entre disque et jante est bien entendu extrêmement sollicitée, notamment en fatigue. Il s'est avéré possible d'exécuter un cordon de soudure qui, même après usinage, confère une liaison suffisamment solide. On peut bien sûr renforcer la liaison en ajoutant par exemple des points de soudures à l'extrémité axialement intérieure 210 de la zone de liaison, sans que cela ne soit indispensable.

Ainsi, l'invention permet de concurrencer les roues moulées du point de vue esthétique, moyennant un surcoût de fabrication qui s'avère très faible par rapport à la différence de prix de revient entre les roues moulées et les roues en tôles.

## Revendications

1. Procédé d'assemblage d'un disque (2) à une jante (1) en une seule pièce pour former une roue, consistant à positionner le disque (2) par rapport à la jante (1) sous le siège (11) axialement extérieur de la jante (1), à réaliser un cordon de soudure (3) continu entre le disque (2) et la jante (1) du côté du disque visible après montage sur un moyeu, caractérisé en ce que on effectue une opération de finition par enlèvement de matière sur le cordon de soudure (3), pour assurer une continuité de forme visuelle entre la jante (1) et le disque (2) ainsi assemblés, ledit cordon de soudure (3) étant exécuté de façon à réaliser un apport de matière suffisant.

2. Roue en tôle, constituée par un disque (2) et une jante (1) en une seule pièce, la jante (1) ayant une gorge centrale (10) de montage et deux sièges (11) disposés de part et d'autre de la gorge (10), chaque siège (11) étant prolongé à son bord latéral par un rebord (12) s'étendant radialement vers l'extérieur, caractérisée en ce que la face axialement extérieure (20A) du disque (2), au niveau de la roue périphérique (20) est disposée sensiblement dans le prolongement de la face axialement extérieure (12A) du rebord de jante (1) et en en ce que la liaison du disque (2) à la jante (1) est constituée par un cordon de soudure (3) continu disposé entre le disque (2) et la jante (1) du côté du disque (2) axialement extérieur, et en ce que le cordon de soudure (3) a subi une opération de finition par enlèvement de matière de sorte que l'état de surface du cordon de soudure (3) assure la continuité de forme visuelle entre le disque (2) et la jante (1).

## Claims

1. A process for assembling a disc (2) and a rim (1) in a single piece to form a wheel, consisting in positioning the disc (2) relative to the rim (1) beneath the axially outer seat (11) of the rim (1), producing a continuous weld bead (3) between the disc (2) and the rim (1) on the side of the disc which is visible once it has been mounted on a hub, characterised in that a finishing operation by removing material is performed on the weld bead (3), in order to provide continuity of visual form between the rim (1) and the disc (2) thus assembled, said weld bead (3) being formed so as to provide a sufficient supply of material.

2. A wheel made of sheet metal, formed by a disc (2) and a rim (1) of a single piece, the rim (1) having a central mounting groove (10) and two seats (11) located on either side of the groove (10), each seat (11) being extended on its lateral edge by a flange (12) extending radially outwards, characterised in that the axially outer face (20A) of the disc (2), at the level of the Peripheral wheel (20), is arranged substantially within the extension of the axially outer face (12A) of the flange (12) of the rim (1) and in that the connection of the disc (2) to the rim (1) is formed by a continuous weld bead (3) located between the disc (2) and the rim (1) on the axially outer side of the disc (2), and in that the weld bead (3) has undergone a finishing operation by removing material such that the surface state of the weld bead (3) provides the continuity of visual form between the disc (2) and the rim (1).

## Patentansprüche

1. Verfahren zur Montage einer Scheibe (2) an einer einstückigen Felge (1), um ein Rad zu bilden, welches Verfahren darin besteht, die Scheibe (2) bezüglich der Felge (1) unter dem axial äußeren Sitz (11) der Felge (1) zu positionieren, eine kontinuierliche Schweißnaht (3) zwischen der Scheibe (2) und der Felge (1) auf der nach Montage an einer Nabe sichtbaren Seite der Scheibe herzustellen,
**gekennzeichnet durch**
eine Endbearbeitung durch Entfernen von Material an der Schweißnaht (3), um eine visuelle Formkontinuität zwischen so zusammengesetzter Felge (1) und Scheibe (2) herzustellen, wobei die Schweißnaht (3) mit ausreichendem Materialauftrag durchgeführt wird.

2. Blechrad, bestehend aus einer Scheibe (2) und einer einstückigen Felge (1), wobei die Felge (1) eine zentrale Montagenut (10) und zwei auf beiden Seiten der Nut (10) angeordnete Sitze (11) hat, wobei jeder Sitz (11) an seinem seitlichen Rand durch eine Krempe (12) verlängert ist, die sich radial nach außen erstreckt,
**dadurch gekennzeichnet,**
daß die axial äußere Seite (2A) der Scheibe (2) in Höhe des Randabschnitts (20) im wesentlichen in Verlängerung der axial äußeren Seite (12A) der Krempe der Felge (1) angeordnet ist, und die Verbindung der Scheibe (2) mit der Felge (1) durch eine kontinuierliche Schweißnaht (3) gebildet ist, die zwischen der Scheibe (2) und der Felge (1) auf der axial äußeren Seite der Scheibe (2) gebildet ist, und daß die Schweißnaht (3) eine Endbearbeitung durch Materialabtrag durchlaufen hat, so daß der Zustand der Oberfläche der Schweißnaht (3) die visuelle Formkontinuität zwischen der Scheibe (2) und der Felge (1) sicherstellt.
